# EUROPÄISCHE PATENTSCHRIFT

(11) **EP 2 175 164 B1**
(45) Veröffentlichungstag und Bekanntmachung des Hinweises auf die Patenterteilung: **31.08.2011**
(21) Anmeldenummer: 08166132.4
(22) Anmeldetag: 08.10.2008
(51) Int. Cl.: F16H 1/16, G01D 5/04, A61G 7/018

(54) **Verstellantrieb für ein verstellbares Teil eines Möbels**
Adjustment unit for an adjustable part of an item of furniture
Mécanisme de réglage pour un élément réglable d'un meuble

(43) Veröffentlichungstag der Anmeldung: 14.04.2010
(73) Patentinhaber: Völker AG, 58454 Witten (DE)
(72) Erfinder: Dietrich, Michael, 09573 Leubsdorf (DE)
(74) Vertreter: von Kreisler Selting Werner

(56) Entgegenhaltungen:
- DE-A1- 10 134 937

## Beschreibung

Die Erfindung betrifft einen Verstellantrieb für ein verstellbares Teil eines Möbels, insbesondere für die Höhen- und/oder Liegeflächenverstellung eines Betts wie beispielsweise eines Krankenhaus- oder Pflegebetts.

Elektrisch verstellbare Möbel wie beispielsweise höhenverstellbare Tische, Sessel, Sofas und Stühle mit Sitzflächen- und/oder Lehnenverstellung oder auch Betten, insbesondere Krankenhaus- oder Pflegebetten mit Höhen- und/oder Liegeflächenverstellung benötigen möglichst kompakte Verstellantriebe, die wartungsarm, montagefreundlich und zuverlässig sind beziehungsweise funktionieren sollten. Beispiele für derartige Verstellantriebe finden sich in DE 296 06 367 U1, DE 20 2007 006 469 U1, DE 20 2007 005 308 U1, EP 1 400 726 A1, EP 0 662 573 B1 und DE 103 29 097 A1.

Diese bekannten Verstellantriebe weisen ein Gehäuse und ein in dem Gehäuse angeordnetes Getriebe auf. Dieses Getriebe umfasst im Regelfall ein drehbares, motorisch antreibbares Antriebselement sowie ein Abtriebselement, das mit dem verstellbaren Teil eines Möbels in Wirkverbindung bringbar ist. Das Antriebselement wird im Regelfall von einem Elektromotor angetrieben, mit dessen Antriebswelle das Antriebselement drehfest verbunden ist. Aus der DE-A-101 34 937 ist ein Verstellantrieb gemäß dem Oberbegriff des Anspruchs 1 bekannt.

Für die automatische Ansteuerung eines Möbels mit mehreren Verstellantrieben, wie dies bei einem Krankenhaus- beziehungsweise Pflegebett mit Höhen- und/oder Liegeflächenverstellung der Fall ist, istes unter dem Aspekt der Minimierung der Verdrahtung von Vorteil, wenn die einzelnen Verstellantriebe an einen Bus angeschlossen sind, der beispielsweise von einer zentralen Steuereinheit gesteuert wird. Neben den Verstellantrieben weist ein derartiges Möbel vorteilhafter Weise aber auch Positions- beziehungsweise Weggeber auf, die die augenblickliche Verstellung eines verstellten Teils des Möbels anzeigen.

Diese Weggeber sind im Regelfall ebenfalls an dem Bus angeschlossen. Jede am Bus angeschlossene Einheit benötigt eine Buskommunikationsschnittstelle mit entsprechender Elektronik, was aufwendig ist und insbesondere auch das Busprotokoll und die Buskommunikation verkompliziert.

Aufgabe der Erfindung ist es daher, einen Verstellantrieb für ein verstellbares Teil eines Möbels zu schaffen, bei dem die Rückmeldung der Position des mit dem Verstellantrieb verstellbaren Teils auf einfache Art und Weise realisiert ist.

Zur Lösung dieser Aufgabe wird mit der Erfindung ein Verstellantrieb für ein verstellbares Teil eines Möbels, insbesondere für die Höhen- und/oder Liegeflächenverstellung eines Betts wie beispielsweise eines Krankenhaus- oder Pflegebetts vorgeschlagen, wobei der Verstellantrieb versehen ist mit den Merkmalen des Anspruchs 1.

Bei dem erfindungsgemäßen Verstellantrieb nach Anspruch 1 ist das Antriebselement zwischen zwei sich im wesentlichen gegenüberliegenden Zahnrädern angeordnet. Das erste dieser beiden Zahnräder ist mit dem Abtriebselement (direkt oder z. B. über ein Getriebe indirekt) gekoppelt. Wird nun dieses erste Zahnrad vom Antriebselement angetrieben, wenn das Abtriebselement unter Last steht, so wirkt auf das Antriebselement beziehungsweise die Antriebswelle des Motors ein vom Zahnrad weggerichtetes Drehmoment. Um das Antriebselement weiterhin in Eingriff mit dem ersten Zahnrad zu halten, wird es durch das zweite Zahnrad sozusagen gegengelagert und damit in Eingriff mit dem ersten Zahnrad gehalten. Das zweite Zahnrad dient also der Aufnahme der zuvor beschriebenen, bei Antrieb unter Last auftretenden und auf das Antriebselement wirkenden Drehmomente.

Dieses zweite Zahnrad wird genutzt, um einen Weggeber zu betreiben, der mit dem zweiten Zahnrad (direkt oder indirekt) gekoppelt ist. Der Weggeber dient der Ermittlung der (Dreh-) Stellung des Abtriebselements. Auf diese Weise kann also das zweite Zahnrad doppelt genutzt werden, was insgesamt zu einem kompakten Aufbau des Verstellantriebs führt. Wenn ein derartiger Verstellantrieb an einen Bus angeschlossen wird, so kann über eine einzige Busschnittstelle sowohl der Verstellantrieb angesteuert werden, als auch vom Verstellantrieb die aktuelle Stellung des Abtriebselements gemeldet werden. Aus dieser Information kann dann in einer übergeordneten Einheit auf die Verstellposition des verstellbaren Teils des Möbels geschlossen werden.

Bei dem Weggeber handelt es sich zweckmäßiger Weise um ein Potentiometer und hier insbesondere um ein Drehpotentiometer. Derartiger Weggeber sind robust und arbeiten zuverlässig. Alternativ zu derartigen resistiv arbeitenden Weggebern kommen andere elektrisch, kapazitiv, induktiv, optisch oder magnetisch arbeitende Weggeber beziehungsweise Sensoren in Frage. Bei dem Weggeber kann es sich entweder um einen Relativ- oder um einen Absolutweggeber handeln. Der Weggeber kann auch als Decoder ausgebildet sein.

Um das verstellbare Teil eines Möbels mit Hilfe des erfindungsgemäßen Verstellantriebs im gesamtem Verstellbereich zu verfahren, wird im Regelfall erforderlich sein, dass sich das Abtriebselement mehrfach um seine eigene Achse dreht. Diese mehrfache Umdrehung des Abtriebselements wird zweckmäßiger Weise auf weniger als eine Umdrehung oder, allgemeiner ausdrückt, auf eine vergleichsweise kleine Wegstrecke des Weggebers abgebildet. Hierzu dient zweckmäßiger Weise eine Untersetzungsgetriebestufe des Verstellantriebes, die ebenfalls im Gehäuse untergebracht ist. Über diese Untersetzungsgetriebestufe ist dann das zweite Zahnrad mit einem Geberelement des Weggebers gekoppelt. Im Falle eines Potentiometers wird also vom zweiten Zahnrad der Schleifkontakt entweder linear oder rotatorisch bewegt.

Wie bereits oben ausgeführt, befindet sich das vom Motor angetriebene Antriebselement zwischen zwei Zahnrädern. Hierbei ist das Antriebselement zweckmäßiger Weise als Schnecke ausgebildet. Alternativ kann das Antriebselement auch selbst als Zahnrad ausgestaltet sein. Im Falle der Ausbildung des Antriebselements als Schnecke, weisen die beiden Zahnräder beispielsweise eine Schrägverzahnung auf, die mit der Schnecke in Eingriff stehen. Erfindungsgemäß weise die beiden Zahnräder jeweils eine erste Verzahnung, die mit dem Abtriebselement kämmt und eine zweite Verzahung auf, über die sie direkt miteinander kämmen. Dies führt zu einer erhöhten Widerstandskraft der Kopplung von Schnecke und erstem Zahnrad, wenn der Antrieb versehentlich "auf Block fährt" , indem das der Schnecke durch die Zahnräder entgegengesetzte Widerstandsmoment erhöht ist.

Zwecks weiterer Erhöhung der Kompaktheit der Bauweise des erfindungsgemäßen Verstellantriebs ist es zweckmäßig, wenn eine Buskommunikationseinheit und der Weggeber (gegebenenfalls mit weiteren elektrischen beziehungsweise elektronischen Bauteilen) auf einer gemeinsamen Platine angeordnet sind, die wiederum geschützt im Gehäuse untergebracht ist.

Bei dem Abtriebselement des Getriebes des Verstellantriebs handelt es sich zweckmäßigerweise um ein Zahnrad (beispielsweise zum Antrieb eines Zahnriemens) oder um eine Spindel, die mit einer Spindelmutter kämmt und ein linear verfahrbares Abtriebselement darstellt. Es ist auch denkbar, das Abtriebselement wahlweise mit einem Zahnrad oder einer Spindel drehfest zu verbinden. Dies vergrößert den Einsatzbereich des Verstellantriebs.

Bei einem von einem Verstellantrieb verstellbaren Teil eines Möbels besteht die Gefahr, dass Lastmomente, die bei ausgeschaltetem Motor auf das Abtriebselement wirken, zu einer Bewegung des verstellbaren Teils des Möbels führen. Dies ist im Regelfall unerwünscht. So sollte sich beispielsweise ein schräggestelltes Oberkörperteil der Liegefläche eines Betts nicht selbsttätig (zurück-) verstellen, wenn in dem Bett eine Person liegt. Insbesondere bei Krankenhaus- und Pflegebetten sollte ein solcher Fall nicht eintreten.

Zur Behebung dieses Problems weisen die eingangs genannten bekannten Verstellantriebe Lastmomentsperren auf, die verhindern, dass sich bei abgeschaltetem Motor das Abtriebselement durch von außen angreifende Momente bewegen lässt. Hierbei ist es grundsätzlich bekannt, sogenannte Klauenbremsen mit Schraubenbremsfedern einzusetzen, die radial auswärts gerichtet vorgespannt in einer Bremstrommel angeordnet sind, Eine derartige Bremse, die automatisch aktiviert wird, wenn auf das Abtriebselement in den Bewegungsrichtungen des Abtriebselements wirkende Drehmomente angreifen, lässt sich auf einfache Art und Weise in dem erfindungsgemäßen Verstellantrieb integrieren. Hierzu weist der Verstellantrieb zweckmäßigerweise eine 2-teilige Welle zwischen dem ersten Zahnrad und dem Abtriebselement auf. Diese zweiteilige Welle ist mit einer mit dem Zahnrad gekoppelten Zahnradwelle und mit einer mit dem Abtriebselement gekoppelten Abtriebselementwelle versehen. Beide Wellenteile greifen über axial abstehende Klauen ineinander, so dass bei Drehung des ersten Zahnrads beziehungsweise der Zahnradwelle die Abtriebselementwelle mitgenommen wird. Damit nun aber ein auf die Abtriebselementwelle von Seiten des Abtriebselements wirkendes Drehmoment nicht zu einer Verdrehung der Abtriebselementwelle führt (was ja eine unbeabsichtigte Verstellung des vom Verstellantrieb angetriebenen Teils des Möbels führen würde), ist bei der Bremse eine Bremstrommel mit in dieser angeordneter Schraubenbremsfeder vorgesehen, die beide im Bereich der ineinandergreifenden Klauen um die zweiteilige Welle herum angeordnet sind. Die Schraubenbremsfeder weist an ihren beiden Enden radial nach innen ragende Mitnehmerarme auf, die zwischen zwei in Umfangsrichtung aufeinander folgende Klauen der beiden Wellenteile hineinragen. Diese Anordnung ist nun derart getroffen, dass die Mitnahme eines der Mitnehmerarme durch eine Klaue der Zahnradwelle (je nach Drehrichtung der Zahnradwelle nimmt dessen Klaue entweder den einen oder den anderen Mitnehmerarm der Schraubenbremsfeder mit) zu einem radialen Zusammenziehen der Schraubenbremsfeder führt, was zur Folge hat, dass sich die radial wirkende Andrückkraft, mit der die Schraubenbremsfeder von innen an der Bremstrommel anliegt, verringert und sich die Schraubenbremsfeder innerhalb der Bremstrommel drehen kann (im allgemeinen unter Anlage an der Bremstrommel). Wird dagegen umgekehrt einer der Mitnehmerarme der Schraubenbremsfeder von der bzw. einer der Klauen der Abtriebselementwelle mitgenommen, so wirkt auf die Schraubenbremsfeder ein diese weiter aufstellendes Moment, was dazu führt, dass sich die Schraubenbremsfeder mit zunehmender Kraft von innen an die Bremstrommel anlegt und somit die Bremswirkung erzeugt wird. Die hier beschriebene Klauenbremse ist an sich bekannt. Ihr Vorteil besteht in ihrer Funktionszuverlässigkeit und kompakten Bauweisen, weshalb sie sich mit Vorteil mit dem erfindungsgemäßen Verstellantrieb kombinieren lässt.

In vorteilhafter Weiterbildung der Erfindung ist ferner vorgesehen, dass das Gehäuse dreiteilig ausgebildet ist und ein erstes Gehäuseteil, an dem der Motor unter Erstreckung seiner Antriebswelle in das erste Gehäuseteil hinein befestigt ist, ein mit dem ersten Gehäuseteil verbindbares, an zwei gegenüberliegenden Seiten offenes zweites Gehäuseteil und einen das zweite Gehäuseteil verschließenden Deckel aufweist. Der Deckel, das erste und das zweite Gehäuseteil sind mittels Verbindungselementen untereinander verbunden, die sich zwischen dem Deckel und dem ersten Gehäuseteil sowie durch das zweite Gehäuseteil hindurch erstrecken.

Die Erfindung wird nachfolgend anhand eines Ausführungsbeispiels der Erfindung und unter Bezugnahme auf die Zeichnung näher erläutert. Im einzelnen zeigen dabei:
- Fig. 1: eine Seitenansicht eines Ausführungsbeispiels des Verstellantriebs mit angedeutetem Innenaufbau des Getriebes und des Weggebers,
- Fig. 2: eine Ansicht des Verstellantriebs längs der Linie II-II bei abgenom- menem oberem Gehäuseteil, wobei in Fig. 2 als Abtriebselement ein Zahnrad gezeigt ist,
- Fig. 3: eine alternative Ausgestaltung des Verstellantriebs in Ansicht längs der Linie II-II der Fig. 1, wobei in Fig. 3 als Abtriebselement eine Spindel für einen Spindelantrieb dargestellt ist,
- Fig. 4: eine vergrößerte Darstellung der Fig. 1 mit im Bereich von IV der Fig. 1 aufgebrochenem Gehäuse zur Verdeutlichung der Getriebestufe für den Weggeber und der Anordnung des Weggebers auf einer Platine mit Buskommunikations- und weiterer Elektronik,
- Fig. 5: eine Schnittansicht entlang der Linie IV-IV in der Fig. 2 zur Verdeutli- chung des Aufbaus der Klauenbremse,
- Fig. 6 bis 8 bzw. 9 bis 11: Schnittdarstellungen entlang der Linie VI bis XV der Fig. 5 zur Ver- deutlichung des Lösens der Klauenbremse, dann, wenn das motorsei- tig angetriebene Zahnrad zum Antrieb des Abtriebselements in einer der beiden entgegensetzten Richtungen bewegt wird, und
- Fig. 12 und 13 bzw. 14 und 15: Schnittansichten entlang der Linie VI bis XV zur Verdeutlichung der selbsttätigen Bremswirkung der Klauenbremse für die Fälle, dass das Abtriebselement in einer seiner beiden Bewegungsrichtungen abtrieb- seitig, also von außen bewegt wird, was beispielsweise durch Last- momente, die auf ein durch den Verstellantrieb verstellbares Teil ei- nes Möbels wirken, erfolgen kann.

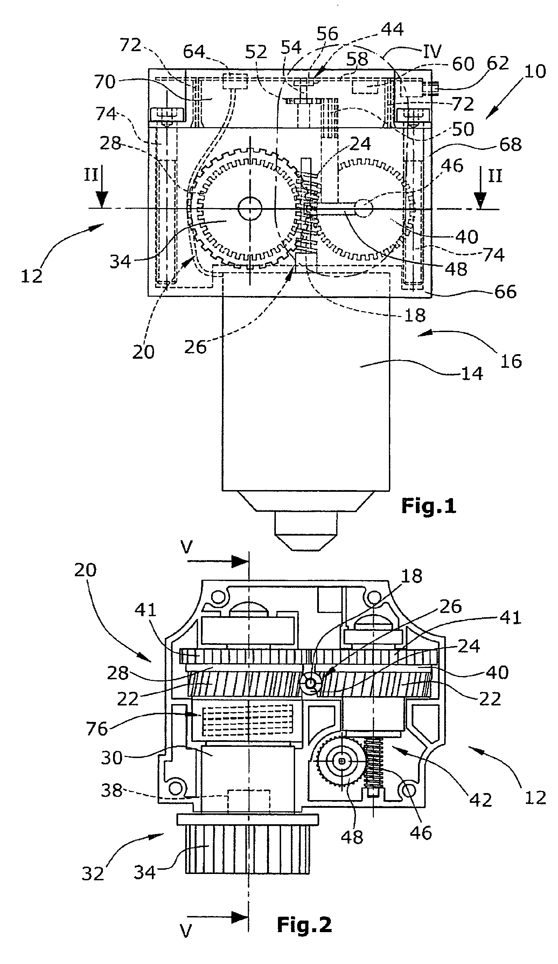

In den Fig. 1 bis 5 ist der konstruktive Aufbau eines Ausführungsbeispiels des erfindungemäßen Verstellantriebs 10 gezeigt. Der Verstellantrieb 10 weist ein in diesem Ausführungsbeispiel dreiteiliges Gehäuse 12 auf, mit dem das Gehäuse 14 eines Elektromotors 16 fest verbunden ist, der Elektromotor 16 weist eine Antriebswelle 18 auf, die sich in das Gehäuse 12 hinein erstreckt.

In dem Gehäuse 12 ist ein Getriebe 20 angeordnet, dass ein als Schnecke 24 ausgebildetes, drehfest mit der Motorwelle 18 verbundenes Antriebselement und ein mit diesem in Eingriff stehendes erstes Zahnrad 28 aufweist.

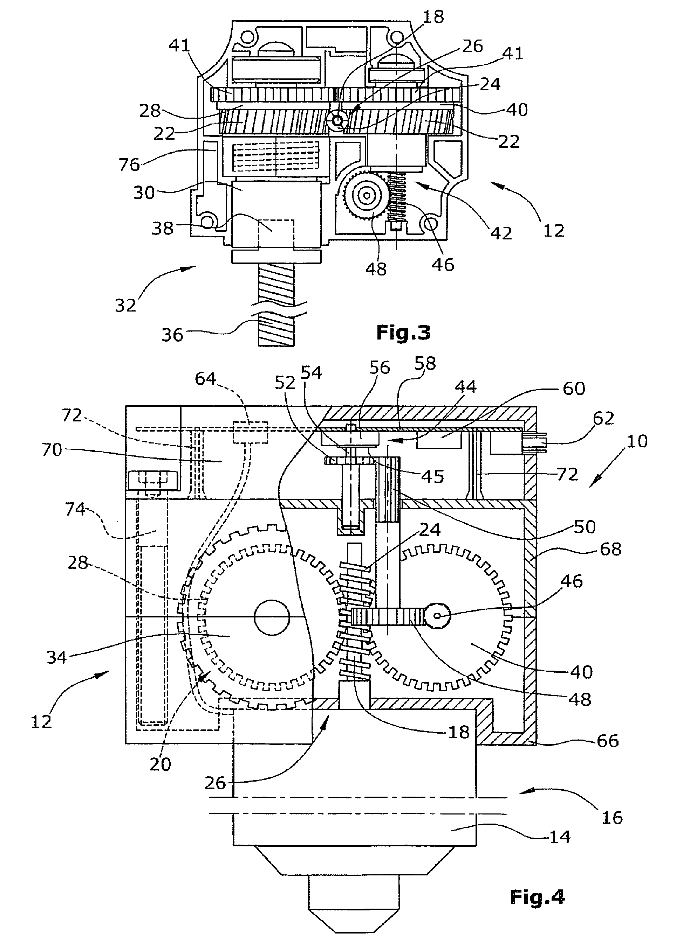

Das erste Zahnrad 28 ist über eine Welle 30 mit einem Abtriebselement 32 gekoppelt. Bei dem Abtriebselement 32 handelt es sich im Ausführungsbeispiel gemäß Fig. 2 um ein Zahnrad 34 beispielsweise zum Antrieb eines Zahnriemens, während in Fig. 3 als Abtriebselement 32 eine Spindel 36 gezeigt ist. Beide Abtriebselemente lassen sich vorteilhafterweise mit der Welle 30 drehfest verbinden. Hierzu dient eine in den Fig. 2 und 3 angedeutete Kupplung, die beispielsweise als Mehrkant-Zapfen mit komplementärer Vierkant-Ausnehmung ausgebildet ist. Es ist aber auch möglich, dass das Zahnrad 34 beziehungsweise die Spindel 36 dauerhaft und damit nicht abnehmbar mit der Welle 30 verbunden ist.

Neben dem ersten Zahnrad 28 des Getriebes 20 weist das Gehäuse 12 ein zweites Zahnrad 40 auf, das ebenfalls von dem Antriebselement 26 (Schnecke 24) drehend angetrieben wird (siehe die ersten Verzahnungen 22). Beide Zahnräder weisen jeweils eine Verzahnung 41 auf, über die sie direkt miteinander kämmen. Das zweite Zahnrad 40 ist Teil einer (Untersetzungs-) Getriebestufe 42 zum Betätigen eines Weggebers 44 mit Geberelement 45.

Das zweite Zahnrad 40 liegt, bezogen auf die Position des Antriebselements 26, dem ersten Zahnrad 28 gegenüber. Mit anderen Worten befinden sich also das Antriebselement 26 direkt zwischen den beiden Zahnrädern 28 und 40. Das zweite Zahnrad 40 stützt das Antriebselement 26 ab, wenn auf dieses mehr zur Antriebswelle 18 und von dem ersten Zahnrad 28 weggerichtete Drehmomente beziehungsweise Drehmomentkomponenten wirken, wie dies insbesondere dann der Fall ist, wenn der Verstellantrieb unter Last arbeitet. Insoweit stützt also das zweite Zahnrad 40 die Antriebswelle 18 beziehungsweise das Antriebselement 26 (Schnecke) ab.

Darüber hinaus dient das zweite Zahnrad 40 aber zusätzlich auch der Betätigung des Weggebers 44. Hierbei ist das zweite Zahnrad 40 Teil der Getriebestufe 42 und ist auf einer gemeinsamen Welle mit einer Schnecke 46 angeordnet, die ihrerseits ein Zahnrad 48 antreibt, das auf einer gemeinsamen Welle mit einem im Durchmesser kleineren Zahnrad 50 angeordnet ist, welches wiederum ein weiteres Zahnrad 52 antreibt, dessen Welle 54 schließlich den Geber 45 betätigt. Der Weggeber 44 ist in diesem Ausführungsbeispiel als Drehpotentiometer 56 ausgebildet.

Das Drehpotentiometer 56 ist auf einer Platine 58 angeordnet, die unter anderem eine Buskommunikationseinheit 60 und weitere elektrische beziehungsweise elektronische Bauteile aufweist. Die elektrische Versorgung und Ansteuerung des Verstellantriebs 10 erfolgt über einen Stecker 62, dessen Anschlüsse von außerhalb des Gehäuses zugänglich sind. Die Platine 58 ist ferner über einen weiteren Stecker 64 elektrisch mit dem Motor 16 verbunden.

Durch die Buskommunikationseinheit ist es möglich, den Verstellantrieb 10 über eine Busleitung anzusteuern. An dieser Busleitung können dann mehrere Verstellantriebe 10 angeschlossen sein. Auf diese Weise können beispielsweise sämtliche in einem Möbel verbaute Verstellantriebe über eine einzige Buskommunikationsleitung angesteuert werden. Dies reduziert den Verdrahtungsaufwand und sorgt hierdurch wiederum für eine Qualitätsverbesserung, indem durch die Verringerung der Anzahl an Verbindungen im Kabelbaum auch das Ausfallrisiko reduziert ist. Ferner ermöglicht die Verwendung von Buskommunikationseinheiten und der Anschluss der Verstellantriebe an einen Bus eine Reduktion der Steckeranzahl, Steckervielfalt und Steckergrößen, da die verbauten Verstellantriebe durchgängig über einheitliche Steckerverbindungen angeschlossen sind. Schließlich wird der Verstellantrieb selbst standardisiert bzw. es kann auf standardisierte Verstellantriebe zurückgegriffen werden. Auch ist die Diagnosefähigkeit sämtlicher Verstellantriebe auf einfache Art und Weise realisierbar, indem über einen Diagnosetester sämtliche am Bus angeschlossenen Verstellantriebe und sonstigen Komponenten getestet werden können. Hierdurch vereinfacht sich die Suche nach Fehlern, was wiederum den Prozess der Behebung der Fehler beschleunigt.

Schließlich ergibt sich aus den Figuren 1 und 4 auch der dreiteilige Aufbau des Gehäuses 12. Dieses weist ein erstes Gehäuseteil 66 auf, an dem das Gehäuse 14 des Motors 16 befestigt ist. An das erste Gehäuseteil 66 schließt sich ein zweites Gehäuseteil 68 an. Zwischen beiden Gehäuseteilen sind die Zahnräder 28, 40 sowie die das erste Zahnrad 28 mit dem Abtriebselement 32 verbindende Welle 30 gelagert. Auch Teile der Getriebestufe 42 für das Drehpotentiometer 56 sind zwischen den beiden Gehäuseteilen 66, 68 gelagert.

Auf der dem ersten Gehäuseteil 66 gegenüberliegenden Seite des zweiten Gehäuseteils 68 befindet sich ein Deckel 70, der die von aufragenden Stiften 72 des zweiten Gehäuseteils 68 gehaltene Platine 58 überdeckt. Die drei Gehäusebestandteile sind durch durchgehende Schrauben 74 untereinander fest und flüssigkeits- beziehungsweise spritzwasserdicht verbunden.

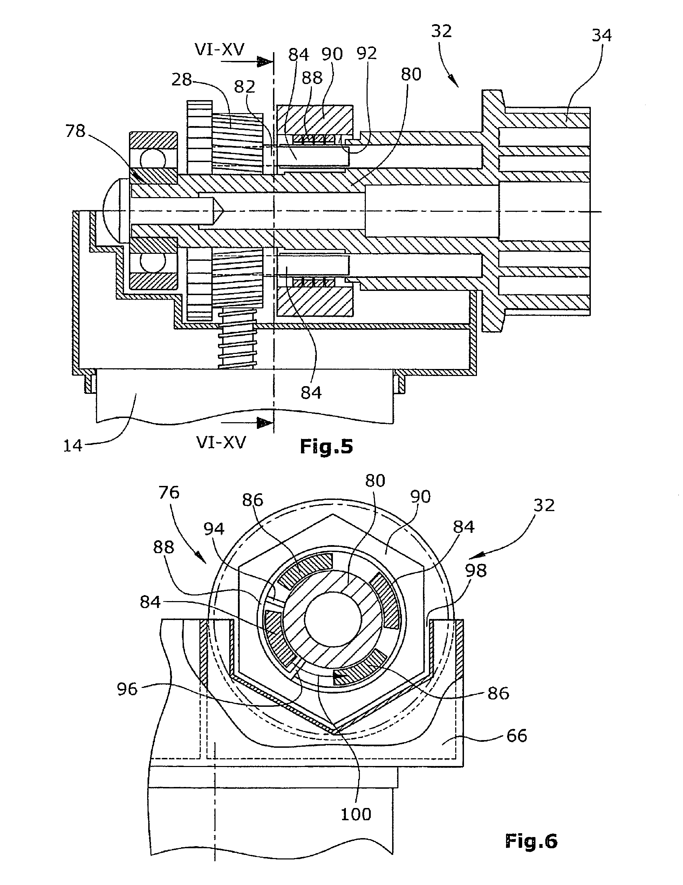

Schließlich befindet sich im Gehäuse 12 der Antriebseinheit 10 auch noch eine Bremse 76. Diese Bremse 76 dient als Lastmomentsperre und verhindert, dass sich bei abgeschaltetem Motor 16 das Abtriebselement 32 drehen kann, falls auf das Abtriebselement 32 Drehmomente wirken, die beispielsweise durch Belastungen von außen auftreten können. Die Bremse 76 wird über die Welle 30 betätigt. Die zur Übertragung der Drehbewegung des ersten Zahnrads 28 auf das Abtriebselement 32 wirkende Welle 30 ist zweiteilig ausgebildet und weist eine im Gehäuse 12 bei 78 drehbar gelagerte Abtriebselementwelle 80 und eine Zahnradwelle 82 auf, wobei das erste Zahnrad 28 in diesem Ausführungsbeispiels drehbar auf der Abtriebselementwelle 80 gelagert ist. Die Abtriebselementwelle 80 und die Zahnradwelle 82 sind jeweils mit zwei einander gegenüberliegenden, axial abstehenden Klauen 84, 86 versehen, die ineinander greifen, wodurch sich bei Rotation des ersten Zahnrades 28 auch die Abtriebselementwelle 80 mitdreht. Das Ineinandergreifen der Klauen 84 und 86 ist in den Fig. 6 bis 15 dargestellt.

Um die Klauen 84 und 86 herum erstreckt sich eine Schraubenbremsfeder 88 mit mehreren Windungen, die radial nach außen vorgespannt in einer Bremstrommel 90 angeordnet ist und an deren Innenumfangsseite 92 mit Kraft anliegt. Die Schraubenbremsfeder 88 weist an ihren Enden jeweils einen radial einwärts gerichteten Mitnehmerarm 94, 96 auf. Der Abstand dieser beiden Mitnehmerarme 94, 96 in Umfangsrichtung der Schraubenbremsfeder 88 bei dessen Betrachtung in axialer Richtung (siehe beispielsweise Fig. 6) ist derart gewählt, dass eine der beiden Klauen 84 der Zahnradwelle 82, also eine der beiden antriebsseitigen Klauen 84 sich axial zwischen diesen Mitnehmerarmen 94, 96 hindurch erstreckt. Mit anderen Worten ragen also die beiden Mitnehmerarme 94, 96 beidseitig der besagten antriebsseitigen Klaue 84 in die Zwischenräume zwischen dieser Klaue 84 und den jeweils benachbarten abtriebseitigen Klauen 86, wie dies beispielsweise in Fig. 6 gezeigt ist.

Die Bremstrommel 90 ist drehfest in einer Aufnahme 98 des ersten Gehäuseteils 66 aufgenommen. Hierzu weist die Bremstrommel 90 beispielsweise eine Sechskant-Außenkontur auf. Die Bremstrommel 90 besteht zweckmäßiger Weise aus einem metallischen Werkstoff, wie dies auch bei der Schraubenbremsfeder 88 der Fall ist.

Anhand der Fign. 6 bis 11 wird nachfolgend kurz erläutert, dass sich die Schraubenbremsfeder 88 in der Bremstrommel 90 zusammen mit dem ersten Zahnrad 28 beziehungsweise den antriebsseitigen Klauen 84 mitbewegt, wenn das erste Zahnrad 28 von dem Motor 16 angetrieben wird. Hierbei spielt es keine Rolle, in welcher Richtung sich das erste Zahnrad 28 dreht.

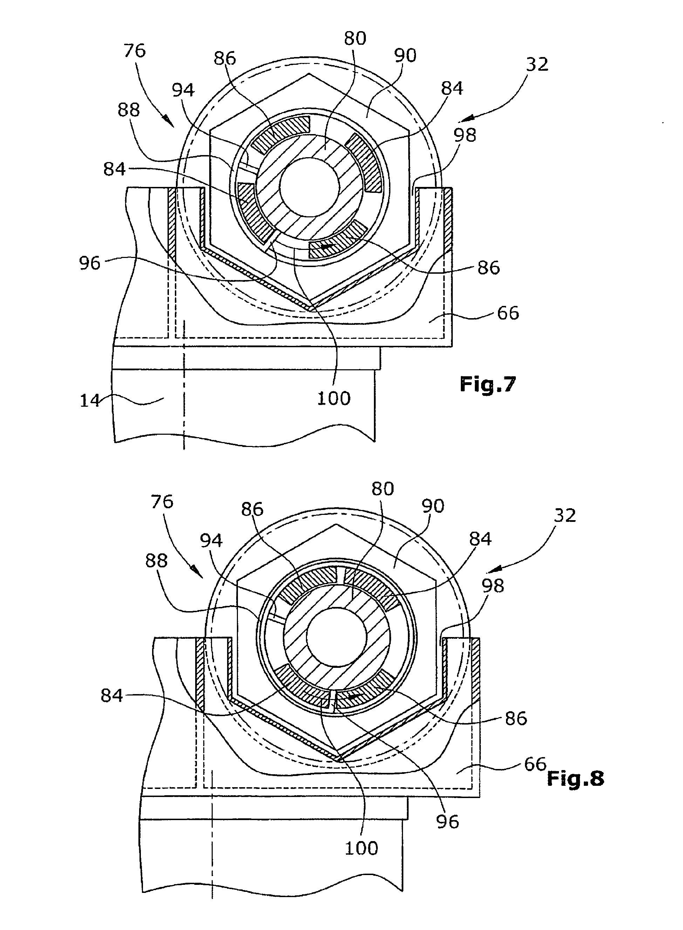

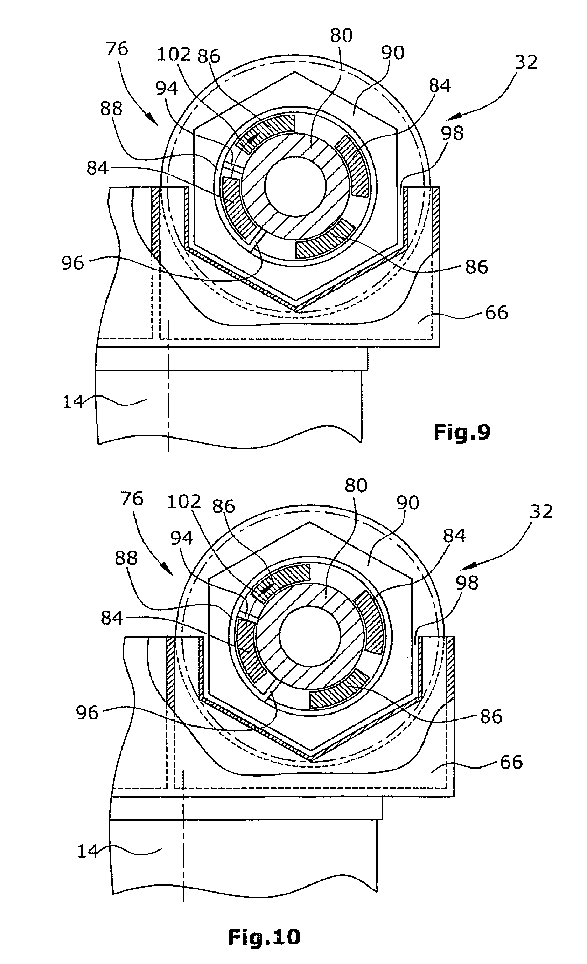

Fig. 6 zeigt die Ausgangsituation, aus der heraus sich nun die antriebsseitigen Klauen 84 in Richtung des Pfeils 100 drehen. Die zwischen den beiden Mitnehmerarmen 94 und 96 angeordnete antriebsseitige Klaue 84 gelangt in Kontakt mit dem Mitnehmerarm 96 der Schraubenbremsfeder 88 (siehe Fig. 7) was bei weiterer Bewegung der Klaue 84 zu einer Einschnürung der Schraubenbremsfeder 88 führt, so dass sich diese mitdreht und in der Folge die antriebsseitigen Klauen 84 in Kontakt mit den abtriebseitigen Klauen 86 gelangen, so dass das Abtriebselement 32 mitgedreht wird. Die Situation bei Rotation des ersten Zahnrads 28 in entgegensetzter Richtung (siehe Richtungspfeil 102) ist in den Fig. 9 bis 11 gezeigt.

Wirkt nun bei ausgeschaltetem Motor 16 auf das Abtriebselement 32 ein Drehmoment, so muss eine Verdrehung des Abtriebselements 32 verhindert werden. In diesem Fall spricht also die Bremse 76 an, und zwar unabhängig davon, in welcher Drehrichtung das Drehmoment auf das Abtriebselement 32 wirkt.

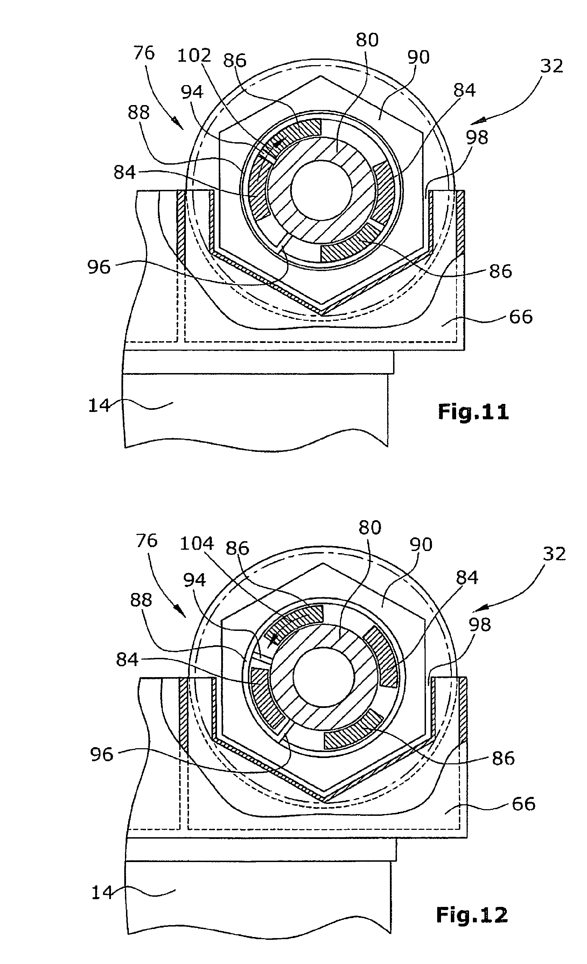

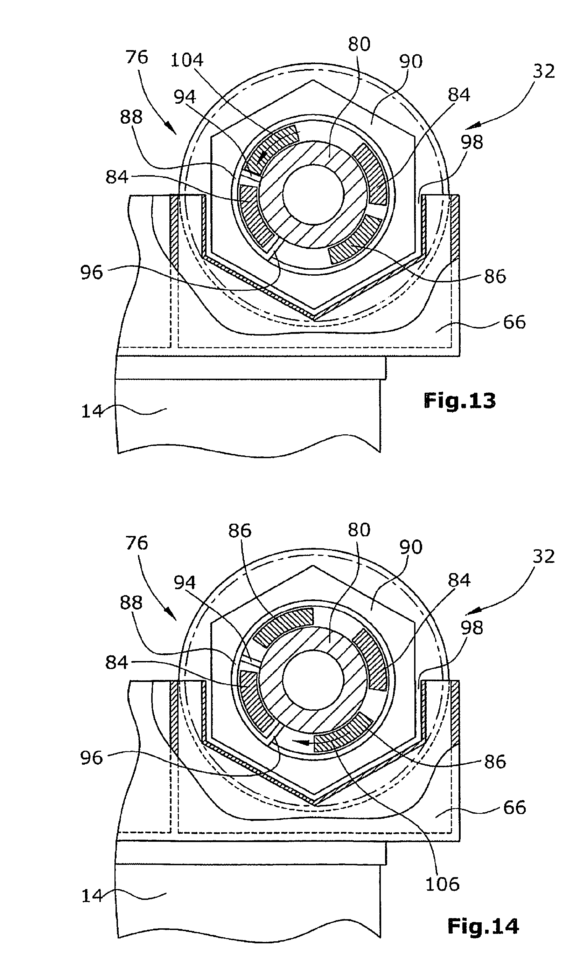

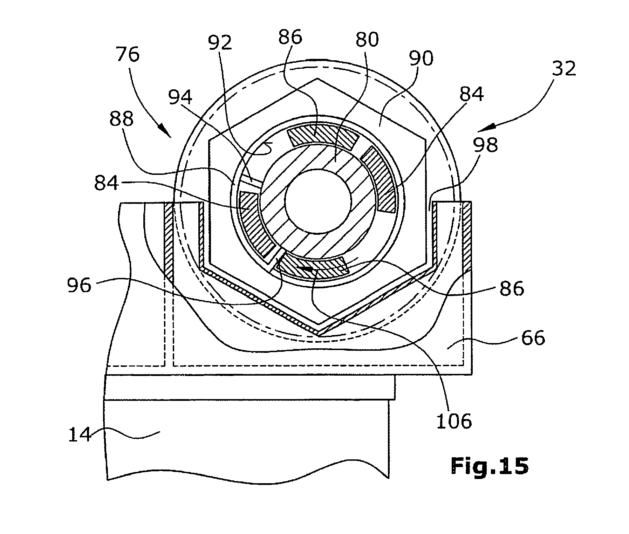

Die Fig. 12 und 13 zeigen den Fall, dass das Abtriebselement 32 in Richtung des Pfeils 104 verdreht wird. Diese Verdrehung führt nach kurzer Zeit bereits dazu, dass eine der beiden abtriebseitigen Klauen 86 in Kontakt mit einem der beiden Mitnehmerarme 94, 96 gelangt. Diese Situation ist in Fig. 13 gezeigt, in der eine der beiden abtriebseitigen Klauen 86 in Kontakt mit dem Mitnehmerarm 96 der Schraubenbremsfeder 88 gelangt. Bei weiterer Verdrehung der Klaue 86 drückt diese über den Mitnehmerarm 96 die Schraubenbremsfeder 88 immer stärker gegen die Innenumfangsseite 92 der Brernstrommel 90, was eine Verdrehung der Schraubenbremsfeder 88 innerhalb der Bremstrommel 90 wirkungsvoll verhindert. Damit ist also das Abtriebselement 32 gebremst. Die gleiche Situation ergibt sich, wenn, wie in den Fig. 14 und 15 gezeigt, das Abtriebselement 32 in der anderen Richtung (siehe Richtungspfeil 106) verdreht wird. Hier gelangt dann wiederum eine der beiden abtriebseitigen Klauen 86 mit dem anderen Mitnehmerarm 96 der Schraubenbremsfeder 88 in Kontakt.

## Patentansprüche

1. Verstellantrieb für ein verstellbares Teil eines Möbels, insbesondere für die Höhen- und/oder Liegeflächenverstellung eines Betts wie z. B. eines Krankenhaus- oder Pflegebetts, mit
- einem Gehäuse (12),
- einem in dem Gehäuse (12) angeordneten Getriebe (20), das ein drehbares Antriebselement (26) sowie ein mit einem verstellbaren Teil eines Möbels in Wirkverbindung bringbares Abtriebselement (32) aufweist,
- einem Motor (16) mit einer Antriebswelle (18) zum drehenden Antreiben des Antriebselements (26) und
- einem Weggeber (44) zur Ermittlung der Drehstellung des Abtriebselements (32),
- wobei das Antriebselement (26) zwischen zwei einander im wesentlichen gegenüberliegenden Zahnrädern (28, 40) angeordnet ist, mit denen das Antriebselement (26) mechanisch in Kontakt steht, und
- wobei das erste Zahnrad (28) mit dem Abtriebselement (32) und das zweite Zahnrad (40) mit dem Weggeber (44) gekoppelt ist,
**dadurch gekennzeichnet,**
- **dass** die Zahnräder (28, 40) jeweils eine erste Verzahnung (22), die mit dem Antriebselement (26) kämmt, und eine zweite Verzahnung (41) aufweisen, über die die beiden Zahnräder (28, 40) direkt miteinander kämmen.

2. Verstellantrieb nach Anspruch 1, **dadurch gekennzeichnet, dass** der Weggeber (44) ein bewegbares Geberelement (45) aufweist und, dass das zweite Zahnrad (40) Teil einer Untersetzungsgetriebestufe (42) zum Bewegen des Geberelements (45) des Weggebers (44) ist.

3. Verstellantrieb nach Anspruch 1 oder 2, **dadurch gekennzeichnet, dass** der Weggeber (44) ein Relativ- oder Absolutweggeber ist und insbesondere elektrisch, kapazitiv, induktiv, resistiv, optisch oder magnetisch arbeitet.

4. Verstellantrieb nach Anspruch 1 oder 2, **dadurch gekennzeichnet, dass** der Weggeber (44) ein Potentiometer (56), insbesondere ein Drehpotentiometer ist.

5. Verstellantrieb nach einem der Ansprüche 1 bis 4, **dadurch gekennzeichnet, dass** das zwischen den beiden Zahnrädern (28, 40) angeordnete Antriebselement (26) als Schnecke (24) ausgebildet ist.

6. Verstellantrieb nach einem der Ansprüche 1 bis 5, **dadurch gekennzeichnet, dass** in oder an dem Gehäuse (12) eine Buskommunikationseinheit (60) zur Steuerung des Motors (16) über ein Bussystem angeordnet ist.

7. Verstellantrieb nach einem der Ansprüche 1 bis 6, **dadurch gekennzeichnet, dass** in dem Gehäuse (12) eine Platine (58) mit elektrischen/ elektronischen Bauelementen angeordnet ist, wobei der Weggeber (44) auf der Platine (58) angeordnet ist.

8. Verstellantrieb nach einem der Ansprüche 1 bis 7, **dadurch gekennzeichnet, dass** das Gehäuse (12) dreiteilig ausgebildet ist und ein erstes Gehäuseteil (66), an dem außen der Motor (16) unter Erstreckung seiner Antriebswelle (18) in das erste Gehäuseteil (66) hinein befestigt ist, ein mit dem ersten Gehäuseteil (66) verbindbares, an zwei gegenüberliegenden Seiten offenes zweites Gehäuseteil (68) und einen das zweite Gehäuseteil (68) verschließenden Deckel (70) aufweist, wobei der Deckel, das erste und das zweite Gehäuseteil (66, 68) mittels Verbindungselementen (74) untereinander verbunden sind, die sich zwischen dem Deckel (70) und dem ersten Gehäuseteil (66) sowie durch das zweite Gehäuseteil (68) hindurch erstrecken.

9. Verstellantrieb nach einem der Ansprüche 1 bis 8, **dadurch gekennzeichnet, dass** zwischen dem ersten Zahnrad (28) und dem Abtriebselement (32) eine zweiteilige Welle (30) mit einer mit dem Zahnrad (28) gekoppelten Zahnradwelle (82) und einer mit dem Abtriebselement (32) gekoppelten Abtriebselementwelle (80) angeordnet ist, dass die beiden Wellenteile (80, 82) axial abstehende und ineinander greifende Klauen (84, 86) zur drehenden Mitnahme der Abtriebselementwelle (80) durch die Zahnradwelle (82) aufweisen und dass um die Klauen (84, 86) herum eine Bremstrommel (90) mit in dieser angeordneter, von innen gegen die Bremstrommel (90) anliegender Schraubenbremsfeder (88) positioniert ist, die an ihren beiden Enden radial nach innen ragende Mitnehmerarme (94, 96) aufweist, die jeweils zwischen den Klauen (84, 86) der Zahnradwelle (82) und der Abtriebselementwelle (80) angeordnet sind.

10. Verstellantrieb nach einem der Ansprüche 1 bis 9, **dadurch gekennzeichnet, dass** das Abtriebselement (32) ein Zahnrad (34) oder eine Spindel (36) oder eine Aufnahme (38) zur drehfesten Aufnahme eines Zahnrades (34) oder eine Spindel (36) aufweist.

## Claims

1. An adjusting drive for an adjustable part of a piece of furniture, particularly for adjusting the height and/or the lying surface of a bed such as, e.g., a hospital bed or nursing bed, said adjusting drive comprising
- a housing (12),
- a gear transmission (20) arranged in said housing (12), said gear transmission comprising a rotatable drive element (26) and a driven element (32) adapted to be brought into operative connection with an adjustable part of a piece of furniture,
- a motor (16) having a drive shaft (18) for rotationally driving said drive element (26), and
- a displacement sensor (44) for detecting the position of said driven element (32),
- said drive element (26) being arranged between two substantially opposite gears (28,40) mechanically contacted by the drive element (26), and
- the first gear (28) being coupled to said driven element (32) and the second gear (40) being coupled to said displacement sensor (44),
**characterized in that**
- the gears (28,40) each comprise a first toothing arrangement (22) meshing with the drive element (26), and a second toothing arrangement (41) causing the two gears (28,40) to mesh directly with each other.

2. The adjusting drive according to claim 1, wherein the displacement sensor (44) comprises a movable sensor element (45) and the second gear (40) is a part of a reduction gear stage (42) for moving said sensor element (45) of the displacement sensor (44).

3. The adjusting drive according to claim 1 or 2, wherein the displacement sensor (44) is a relative or absolute displacement sensor, particularly of the type for electrical, capacitive, inductive, resistive, optical or magnetic operation.

4. The adjusting drive according to claim 1 or 2, wherein the displacement sensor (44) is a potentiometer (56) and particularly a rotary potentiometer.

5. The adjusting drive according to one of claims 1 to 4, wherein the drive element (26) arranged between the two gears (28,40) is provided in the form of a worm (24).

6. The adjusting drive according to one of claims 1 to 5, wherein a bus communication unit (60) for controlling the motor (16) via a bus system is arranged within or on the housing (12).

7. The adjusting drive according to one of claims 1 to 6, wherein a circuit board (58) with electrical/electronic components is arranged in the housing (12), said circuit board (58) having the displacement sensor (44) being arranged on it.

8. The adjusting drive according to one of claims 1 to 7, wherein the housing (12) is of a three-part configuration and comprises a first housing member (66) having the motor (16) externally fastened thereto, with the drive shaft (18) of the motor (16) extending into said first housing member (66), a second housing member (68) adapted to be connected to said first housing member (66) and being open on two opposite sides, and a lid (70) closing said second housing member (68), said lid (70) and said first and second housing members (66,68) being connected to each other by connection elements (74) extending between the lid (70) and the first housing member (66) as well as through the second housing member (68).

9. The adjusting drive according to one of claims 1 to 8, wherein a two-part shaft (30) is arranged between the first gear (28) and the driven element (32), said two-part shaft (30) comprising a gear shaft (82) coupled to said gear (28), and a driven-element shaft (80) coupled to the driven element (32), wherein the two shaft parts (80,82) comprise axially projecting and mutually engaging claws (84,86) for rotational entrainment of said driven-element shaft (80) by said gear shaft (82), and wherein, around said claws (84,86), a brake drum (90) is positioned, said brake drum (90) comprising a helical brake spring (88) arranged therein and pressing from inside against the brake drum (90), said helical brake spring (88) being on both of its ends provided with radially inwardly projecting entrainment arms (94,96) each extending between the claws (84,86) of the gear shaft (82) and of the driven-element shaft (80).

10. The adjusting drive according to one of claims 1 to 9, wherein the driven element (32) comprises a gear (34) or a spindle (36), or a recess (38) for receiving a gear (34) or a spindle (36) for common rotation therewith.

## Revendications

1. Mécanisme de réglage pour un élément réglable d'un meuble, notamment pour le réglage en hauteur ou de la surface de repos d'un lit, pour exemple d'un lit d'hôpital ou un lit de soin, comprenant
- un boitier (12),
- un engrenage (20) situé dans ledit boitier (12), ledit engrenage comprenant un élément d'entrée (26) rotatif et un élément de sortie (32) apte à être lié de manière fonctionnelle avec un élément réglable d'un meuble,
- un moteur (16) avec un arbre d'entrée (18) pour l'entrainement à rotation dudit élément d'entrée (26), et
- un capteur de déplacement (44) pour déterminer la position rotatoire dudit élément de sortie (32),
- ledit élément d'entrée (26) étant situé entre deux roues dentées (28, 40) sensiblement opposées avec lesquelles ledit élément d'entrée (26) est en contact mécanique, et
- la première roue dentée (28) étant couplée avec ledit élément de sortie (32) et la deuxième roue dentée (40) étant couplées avec ledit capteur de déplacement (44),
**caractérisé en ce que**
- lesdites roues dentées (28, 40) respectives comprennent une première denture (22) en prise avec ledit élément d'entrée (26), et une deuxième denture (41) par laquelle les deux roues dentées (28, 40) sont en prise directe l'une avec l'autre.

2. Mécanisme de réglage selon la revendication 1, **caractérisé en ce que** ledit capteur de déplacement (44) comprend un élément capteur (45) mobil, et que ladite deuxième roue dentée (40) fait partie d'un train d'un réducteur de vitesse (42) servant à déplacer ledit élément capteur (45) dudit capteur de déplacement (44).

3. Mécanisme de réglage selon les revendications 1 ou 2, **caractérisé en ce que** ledit capteur de déplacement (44) est un capteur de déplacement relatif ou absolu et fonctionne en particulier électriquement, capacitivement, inductivement, résistivement, optiquement ou magnétiquement.

4. Mécanisme de réglage selon les revendications 1 ou 2, **caractérisé en ce que** ledit capteur de déplacement (44) est un potentiomètre (56), notamment un potentiomètre rotatif.

5. Mécanisme de réglage selon l'une quelconque des revendications 1 à 4, **caractérisé en ce que** ledit élément d'entrée (26) situé entre les deux roues dentées (28, 40) est en forme d'une vis sans fin (24).

6. Mécanisme de réglage selon l'une quelconque des revendications 1 à 5, **caractérisé en ce qu'**une unité de communication par bus (60) est prévue dans ou sur ledit boitier (12) pour commander ledit moteur (16) par un système de bus.

7. Mécanisme de réglage selon l'une quelconque des revendications 1 à 6, **caractérisé en ce qu'**une platine (58) avec composants électriques/électroniques est prévu dans ledit boitier (12), ledit capteur de déplacement (44) étant situé sur ladite platine (58).

8. Mécanisme de réglage selon l'une quelconque des revendications 1 à 7, **caractérisé en ce que** ledit boitier (12) est formé en trois parties et comprend une première partie de boitier (66), sur l'extérieur de laquelle est monté ledit moteur (16) dont l'arbre d'entrée (18) s'étend dans ladite première partie de boitier (66), une deuxième partie de boitier (68) connectable avec ladite première partie de boitier (66) et ouverte sur deux côtés opposants, et un couvercle (70) fermant ladite deuxième partie de boitier (68), ledit couvercle, ladite première et ladite deuxième partie de boitier (66, 68) étant interconnectés par des éléments de liaison (74) s'étendant entre ledit couvercle (70) et ladite première partie de boitier (66) et à travers ladite deuxième partie de boitier (68).

9. Mécanisme de réglage selon l'une quelconque des revendications 1 à 8, **caractérisé en ce qu'**entre ladite première roue dentée (28) et ledit élément de sortie (32) un arbre (30) en deux parties est situé, comprenant un arbre de roue dentée (82) couplé avec ladite roue dentée (28) et un arbre d'élément de sortie (80) couplé avec ledit élément de sortie (32), que les deux parties d'arbre (80, 82) comprennent des pattes (84, 86) saillant axialement et étant en prise l'une avec l'autre pour l'entrainement en rotation dudit arbre d'élément de sortie (80) par ledit arbre de roue dentée (82), et qu'un tambour de frein (90) est prévu autour des pattes (84, 86), comprenant un ressort hélicoïdal de frein (88) positionné dans ledit tambour et restant sur l'intérieur dudit tambour de frein (90), les deux extrémités dudit ressort comprenant des bras d'entrainement (94, 96) s'étendant radialement vers l'intérieur, lesdits bras respectifs étant situés entre lesdites pattes (84, 86) dudit arbre de roue dentée (82) et dudit arbre d'élément de sortie (80).

10. Mécanisme de réglage selon l'une quelconque des revendications 1 à 9, **caractérisé en ce que** ledit élément de sortie (32) comprend une roue dentée (34) ou une broche (36) ou un logement (38) pour recevoir une roue dentée (34) ou une broche (36) d'une manière liée en rotation.
